# EUROPEAN PATENT APPLICATION

(11) **EP 4 682 801 A1**
(43) Date of publication of application: **21.01.2026**
(21) Application number: 25189197.4
(22) Date of filing: 11.07.2025
(51) Int. Cl.: G06Q 20/20, G06Q 20/32, G06Q 20/36

(54) **SYSTEMS AND METHOD FOR CONDUCTING PAYMENT NETWORK-LESS TRANSACTIONS**

(30) Priority: 16.07.2024 US 202418774669
(71) Applicant: JPMorgan Chase Bank, N.A., New York, NY 10179 (US)
(72) Inventor: SPECTOR, Howard, New York, 10179 (US); ARAVAMUDHAN, Sridhar, New York, 10179 (US); CULOT, Louis, New York, 10179 (US); OLEBE, Edward, New York, 10179 (US); CONRAD, Chris, New York, 10179 (US); ALEXANDER, Emi, New York, 10179 (US)
(74) Representative: Patentanwälte Olbricht Buchhold Keulertz

(57) **Abstract**

Systems and methods for conducting payment network-less transactions are disclosed. A method may include: receiving, by a computer application executed on an electronic device, payment card information for a payment card; receiving by the computer application, a rule for the payment card from an issuer backend, the issuer backend associated with an issuer of the payment card; communicating, by the computer application and to a merchant point-of-sale device, an indication that a transaction for a good or service will be conducted without using a payment network; receiving, by the computer application and from the merchant point-of-sale device, transaction details for the transaction; decisioning, by the computer application, the transaction by applying the rule to the transaction details; communicating, by the computer application, approval to the merchant point-of-sale device in response to approving the transaction; and sending, by the computer application, payment advice to the issuer backend.

## Description

### BACKGROUND OF THE INVENTION

### 1. Field Of The Invention

Embodiments generally relate to systems and methods for conducting payment network-less transactions.

### 2. Description of the Related Art

When using a digital wallet, customers are required to add their payment cards to a wallet in order to conduct the transaction. This limits the customers' ability to use the payment card of their choice when conducting the transaction.

### SUMMARY OF THE INVENTION

Systems and methods for conducting payment network-less transactions are disclosed. According to an embodiment, a method may include: (1) receiving, by a computer application executed on an electronic device, payment card information for a payment card; (2) receiving by the computer application, a rule for the payment card from an issuer backend, the issuer backend associated with an issuer of the payment card; (3) communicating, by the computer application and to a merchant point-of-sale device, an indication that a transaction for a good or service will be conducted without using a payment network; (4) receiving, by the computer application and from the merchant point-of-sale device, transaction details for the transaction; (5) decisioning, by the computer application, the transaction by applying the rule to the transaction details; (6) communicating, by the computer application, approval to the merchant point-of-sale device in response to approving the transaction; and (7) sending, by the computer application, payment advice to the issuer backend.

In one embodiment, the payment card may include a payment token.

In one embodiment, the rule may include a purchase limit.

In one embodiment, the rule may include a restriction on a type of good or service, or on a merchant category.

In one embodiment, the transaction details comprise a transaction amount, a merchant identifier, and a description of the good or service.

In one embodiment, the approval may include a transaction identifier or an approval identifier.

In one embodiment, the payment advice may include the transaction identifier or the approval identifier and the transaction details.

In one embodiment, the transaction may be conducted without using a payment network in response to a payment network or the issuer backend being unavailable.

According to another embodiment, a method may include: (1) prompting, by a merchant point-of-sale device, a customer for payment for a transaction; (2) reading, by the merchant point-of-sale device and using a camera, an optical code that identifies a payment card and may include an indicator for payment network-less transactions; (3) identifying, by the merchant point-of-sale device, the transaction as a payment network-less transaction based on the optical code; (4) communicating, by the merchant point-of-sale device and without using a payment network, transaction details for the transaction, information from the optical code, and a merchant identifier to an issuer backend for an issuer of the payment card; and (5) receiving, by the merchant point-of-sale device and from the issuer backend, a decision on the transaction.

In one embodiment, the optical code may be read from a payment card or from a customer electronic device.

In one embodiment, the optical code may include a Quick Response (QR) code or a bar code.

In one embodiment, the method may also include: receiving, by the merchant point-of-sale device, a personal identification number (PIN); wherein the merchant point-of-sale device communicates the PIN with the information from the optical code.

In one embodiment, decision may include a rejection of the transaction, and the method may also include: executing, by the merchant point-of-sale device, the transaction using a payment network.

In one embodiment, the issuer backend may be configured to push a notification to the customer electronic device and to receive confirmation for the transaction from a computer application associated with the issuer backend.

In one embodiment, the customer electronic device may be configured to suppress the notification from other computer applications on the customer electronic device.

In one embodiment, the method may also include: approving, by an issues application executed by a customer electronic device, the transaction in response to the issuer backend being unavailable.

According to another embodiment, a method may include: (1) prompting, by a merchant point-of-sale device, a customer for payment for a transaction; (2) receiving, by the merchant point-of-sale device, a payment card and from the customer; (3) identifying, by the merchant point-of-sale device, the payment card as eligible for alternate routing to a payment provider; (4) routing, by the merchant point-of-sale device, transaction details for the transaction and payment card information read from the payment card to the payment provider; (5) conducting, by the payment provider, the transaction using direct integration with an issuer of the payment card, wherein the direct integration bypasses a payment network; and (6) receiving, by the merchant point-of-sale device, a decision on the transaction from an issuer backend for the issuer.

In one embodiment, the payment card may be identified as eligible for alternate routing based on a bank identification number for the payment card.

In one embodiment, the payment card may be identified as eligible for alternate routing based on an identifier received from an application executed by an electronic device associated with the customer.

In one embodiment, the transaction may be conducted using direct integration in response to a payment network or the issuer backend being unavailable.

### BRIEF DESCRIPTION OF THE DRAWINGS

For a more complete understanding of the present invention, the objects and advantages thereof, reference is now made to the following descriptions taken in connection with the accompanying drawings in which:
Figure 1 depicts a system for conducting payment network-less transactions according to an embodiment;
Figure 2 depicts a method for conducting payment network-less transactions according to an embodiment;
Figure 3 depicts a method for conducting payment network-less transactions according to an embodiment;
Figure 4 depicts a method for conducting payment network-less transactions according to another embodiment;
Figure 5 depicts a method for conducting payment network-less transactions according to another embodiment;
Figure 6 depicts an exemplary computing system for implementing aspects of the present disclosure.

### DETAILED DESCRIPTION OF PREFERRED EMBODIMENTS

Embodiments generally relate to systems and methods for conducting payment network-less transactions.

In one embodiment, integration between a payment card and a payment provider, such as a digital wallet provider, may provide direct issuer authorization, clearing, and settlement without using a traditional payment network (e.g., VisaNet). For example, a switch may be provided to route transactions to the issuer's issuing platforms rather than to the payment network.

In another embodiment, after reading the payment instrument, the merchant may recognize that the payment instrument is eligible for alternate routing to the digital wallet provider. The point-of-sale device may encrypt the data received from the payment instrument and may send the encrypted data to the digital wallet provider or the issuer, which may use direct issuer integration to run the transaction. In another embodiment, the point-of-sale device may encrypt the data and may send the encrypted data to an application on the user electronic device if the user electronic device is capable of executing the transaction.

In one embodiment, a payment card be provided with an optical code, such as a Quick Response (QR) code, that may be printed on the back of the payment card. The optical code may identify the payment provider, may include an alias for an account, etc. The optical code may be scanned at a point-of-sale device by a merchant associated with the digital wallet provider, and the point-of-sale device may then prompt the customer to enter a personal identification number (PIN) or similar. The merchant may send the transaction details or information, the data from the optical code, and the PIN directly to the issuer where the issuer may validate the data and authorize the transaction.

In embodiments, service level agreements (SLAs) may be revised to allow for customer interaction using the customer's electronic device at the point-of-sale device. For example, the point-of-sale device may scan the optical code and send the information in the optical code with the transaction details or information to a digital wallet provider, the issuer, an application on the user's electronic device, etc. The digital wallet provider may then push a message to the customers device to confirm the transaction before it is approved. The message may be a text message, an in-app message, etc.

In embodiments, geo-fencing may be used to ensure that the customer is near the point-of-sale device before the message is sent. This may increase confidence in the transaction.

In one embodiment, the location of the point-of-sale device and/or the user electronic device may be sent to the issuer and/or the digital wallet provider, which may validate the locations.

In one embodiment, if the issuer and/or the digital wallet provider are unavailable, the user electronic device may be configured to approve the transaction subject to certain rules (e.g., maximum amount, types of goods/services, time of transaction, etc.).

In another embodiment, a payment card may be provisioned to a wallet application, and the issuer may set rules and/or transactions limits on any transactions conducted using payment network-less payments. The rules and/or transaction limits may be provided to an issuer application on the customer electronic device, and the wallet application may retrieve the rules and/or transaction limits from the issuer application. In another embodiment, the wallet application may retrieve the rules and/or transaction limits from the issuer on-demand, periodically, etc. The wallet application may apply the rules and/or transaction limits to a transaction and may provide a decision to a merchant point-of-sale device. Once the transaction is complete, the merchant backend may settle the transaction with the issuer backend.

In another embodiment, payment network-less transactions may be dynamically selected in response to issues with the payment network, communication issues, etc.

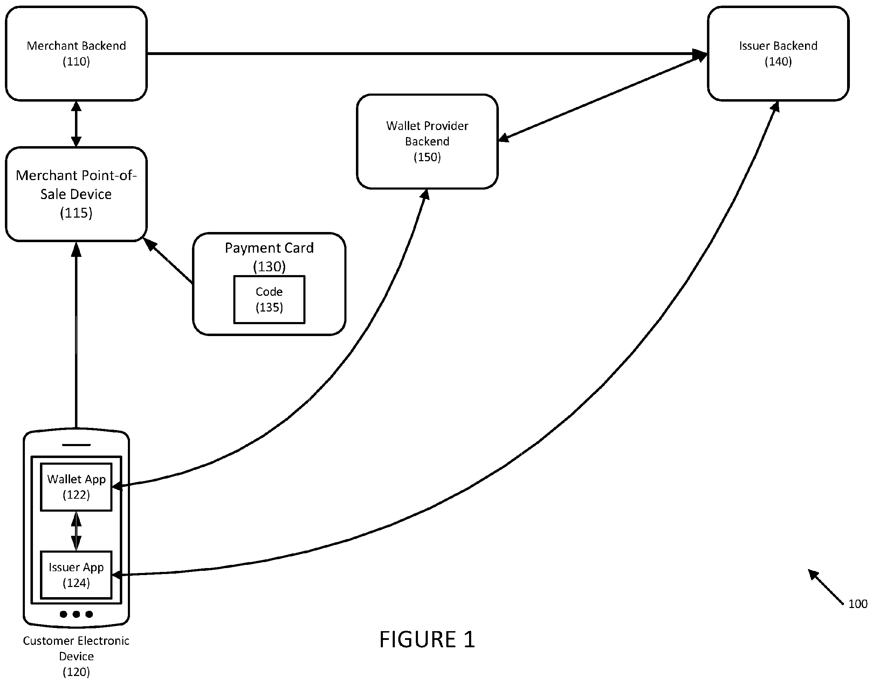

Figure 1 depicts a system for conducting payment network-less transactions according to an embodiment. System 100 may include a merchant including merchant backend 110 and merchant point-of-sale device 115. Merchant point-of-sale device 115 may interact with customer electronic device 120, which may be a computer, a smart device (e.g., a smart watch, a smart phone, etc.), an Internet of Things (IoT) appliance, etc. Customer electronic device 120 may execute one or more computer programs or applications, including wallet application 122, issuer application 124, etc.

Wallet application 122 may store payment card information, such as tokens, identifiers, etc. for payment cards that have been provisioned to wallet application 122. It may further communicate with wallet provider backend 150, which may provide a payment mechanism for a transaction.

Wallet application 122 may further interact with issuer application 124. Issuer application 124 may interface with issuer backend 140, and may store rules and/or transaction limits for transactions conducted without using a traditional payment network.

Merchant backend 110 and issuer backend 140 may settle a transaction using, for example, a transaction identifier, authorization number, or any other suitable identifier for the transaction.

Wallet application 122 and/or issuer application 124 may further display an optical code, such as a QR code, to point-of-sale device 115 to indicate that a transaction will be conducted without using a payment network.

Customer electronic device 120, wallet application 122, and/or issuer application may also communicate with point-of-sale device 115 via Bluetooth Lowe Energy (BLE), Near Field Communication (NFC), WiFi, using audio, etc.

System 100 may further include payment card 130, which may be a physical payment device (e.g., a credit card, a debit card, etc.) Payment card 130 may include code 135, which may be an optical code (e.g., a Quick Response (QR) code, a bar code, etc.). Code 135 may indicate to point-of-sale device 115 that a transaction will be conducted without using a payment network, such as by using wallet provider backend 150 or a similar payment provider.

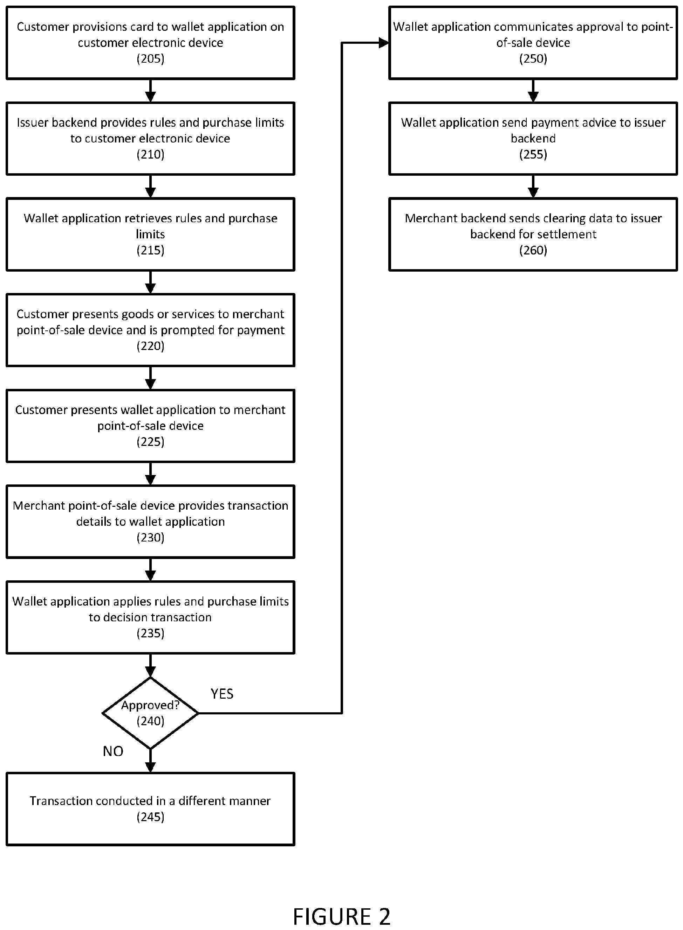

Referring to Figure 2, a method for conducting payment network-less transactions is disclosed according to an embodiment.

In step 205, a customer may provision a payment card to a wallet application on a customer electronic device. This may provision a token or similar identifier for the payment card in the wallet application.

In step 210, an issuer backend may provide rules and/or purchase limits for the provisioned payment card to the customer electronic device. For example, the issuer backend may set conditions on any transactions conducted without a payment network. The conditions may be updated on demand, periodically, etc.

Examples of conditions may include restrictions on merchants (e.g., by Merchant Category Code, or MCC), geographical restrictions, time restrictions, transaction velocity restrictions, etc.

In one embodiment, the issuer backend may send the rules and/or purchase limits to an issuer application on the customer electronic device, or may make them available to the wallet application and/or wallet application backend.

In step 215, the wallet application may retrieve the rules and/or purchase limits from the issuer application, the issuer backend, or the wallet provider backend. The wallet application may retrieve the rules and/or purchase limits periodically, on demand, etc.

In step 220, the customer may present a good or service to a merchant point-of-sale device, and the merchant point-of-sale device may prompt the user for payment.

In step 225, the customer may present the wallet application to the merchant point-of-sale device. This may be done by holding the customer electronic device near the point-of-sale device, and the two may communicate using, for example, near field communication.

In one embodiment, as a part of the interaction, the wallet application may indicate to the merchant point-of-sale device that the transaction is a payment network-less transaction by providing a suitable indication.

In one embodiment, the transaction may be conducted as a payment network-less transaction in response to the payment network or the issuer backend being unavailable.

In one embodiment, the transaction may be identified as a payment network-less transaction based on a bank identification number (BIN) or BIN range for the payment card.

In step 230, the merchant point-of-sale device may provide transaction details for the transaction to the wallet application. The transaction details may include the transaction amount, a merchant identifier, merchant category codes, a description of the good or service, etc.

In step 235, the wallet application may apply the rules and/or purchase limits to the transaction in order to decision the transaction.

In step 240, if the transaction is not approved, in step 245, the transaction may be conducted in a different manner (e.g., using the payment network).

If the transaction is approved, in step 250, the wallet application may communicate the approval to the point-of-sale device and the customer may receive the goods or services. In one embodiment, the approval may include an identifier, such as a transaction identifier, approval identifier, etc.

In step 255, the wallet application may send payment advice to the issuer backend, including the identifier (e.g., the transaction identifier or approval identifier), the transaction details, etc.

In step 260, the merchant backend may send clearing data to the issuer backend for settlement. The clearing data may include the identifier (e.g., the transaction identifier or approval identifier), the transaction details, etc. The parties may then settle the transaction.

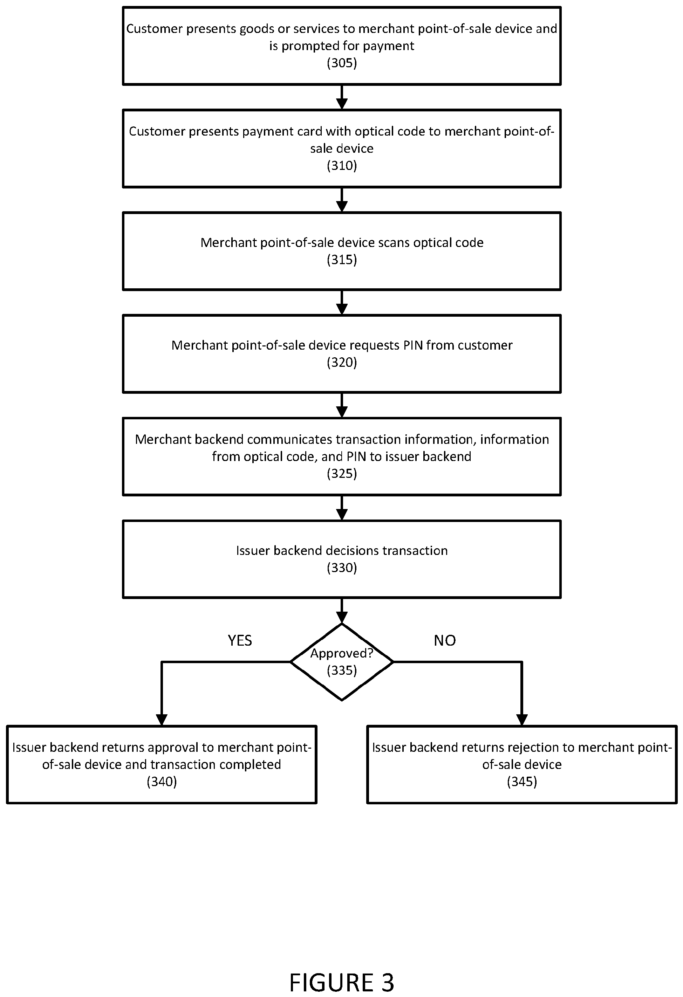

Referring to Figure 3, a method for conducting payment network-less transactions is provided according to another embodiment. The transaction may be conducted without using a traditional payment network.

In step 305, a customer may present goods or services to a merchant point-of-sale device and may be prompted for payment. This may be similar to step 220.

In step 310, the customer may present a payment card with an optical code to the merchant point-of-sale device. The optical code may be a QR code, a bar code, etc. The optical code may identify the issuer, the customer to the issuer, etc., and may identify the transaction as a payment network-less transaction.

In another embodiment, the customer may present the optical code on a customer electronic device. An issuer application executed by the electronic device may display the code on the screen of the device.

In step 315, the merchant point-of-sale device may scan or read the optical code and may identify the transaction as a payment network-less transaction.

In step 320, the merchant point-of-sale device may request a PIN or similar identifier from the customer, and the customer may enter the PIN or similar identifier into a keypad on the point-of-sale device, on the customer mobile electronic device, etc.

In step 325, the merchant backend may communicate the transaction details, information from optical code, and the PIN or similar identifier to the issuer backend for the payment card. It may further communicate a merchant identifier for the merchant, a point-of-sale identifier for the point-of-sale device, etc.

In step 330, the issuer backend may decision the transaction. If, in step 335, the transaction is approved, in step 340, the issuer backend may return a transaction approval to the merchant point-of-sale device, and the transaction may be completed.

If the transaction is denied, in step 345, the issuer backend may return a transaction rejection to the merchant point-of-sale device. The transaction may then be attempted in a different manner (e.g., by using a payment network).

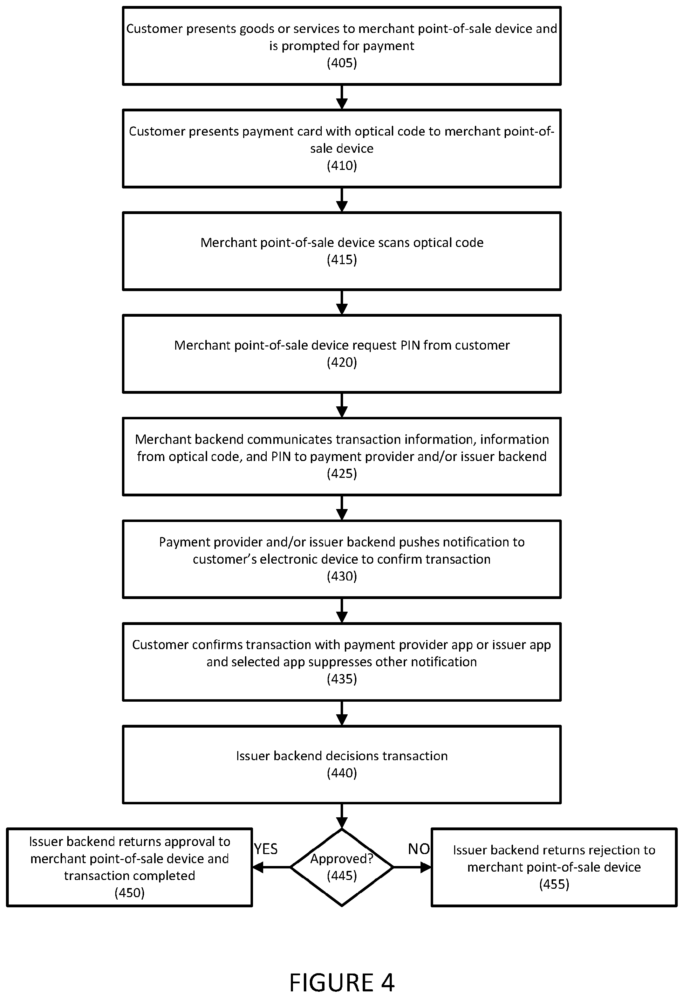

Referring to Figure 4, a method for conducting payment network-less transactions is provided according to another embodiment. The transaction may be conducted without using a traditional payment network.

In step 405, a customer may present goods or services to a merchant point-of-sale device and may be prompted for payment. This may be similar to step 220.

In step 410, the customer may present a payment card with an optical code to the merchant point-of-sale device. The optical code may be a QR code, a bar code, etc. The optical code may identify the issuer, the customer to the issuer, etc., and may identify the transaction as a payment network-less transaction.

In another embodiment, the customer may present the optical code on a customer electronic device. An issuer application executed by the electronic device may display the code on the screen of the device.

In step 415, the merchant point-of-sale device may scan the optical code, and may identify the transaction as a payment network-less transaction.

In step 420, the merchant point-of-sale device may request a PIN or similar identifier from the customer, and the customer may enter the PIN or similar identifier into a keypad on the point-of-sale device, on the customer mobile electronic device, etc.

In step 425, the merchant backend may communicate the transaction details, information from optical code, and the PIN or similar identifier to the issuer backend for the payment card and/or the payment provider. It may further communicate a merchant identifier for the merchant, a point-of-sale identifier for the point-of-sale device, etc.

In step 430, the payment provider and/or the issuer backend may push a notification to the customer's electronic device to confirm the transaction. The notification may be an in-application message to the payment provider or issuer's application, may be a text message, etc.

In step 435, the customer may confirm the transaction with the payment provider application or the issuer application. The selected application may then suppress the notification from the other application (e.g., the payment provider application may suppress a notification from the issuer application). The application may then communicate approval to the issuer backend.

In step 440, the issuer backend may decision the transaction.

If, in step 445, the transaction is approved, in step 450, the issuer backend may return an approval to the merchant point-of-sale device and the transaction may be completed. The issuer backend may include the transaction identifier in the communication.

If the transaction is rejected, in step 455, the issuer backend may return a rejection to the merchant point-of-sale device. The issuer backend may include the transaction identifier in the communication.

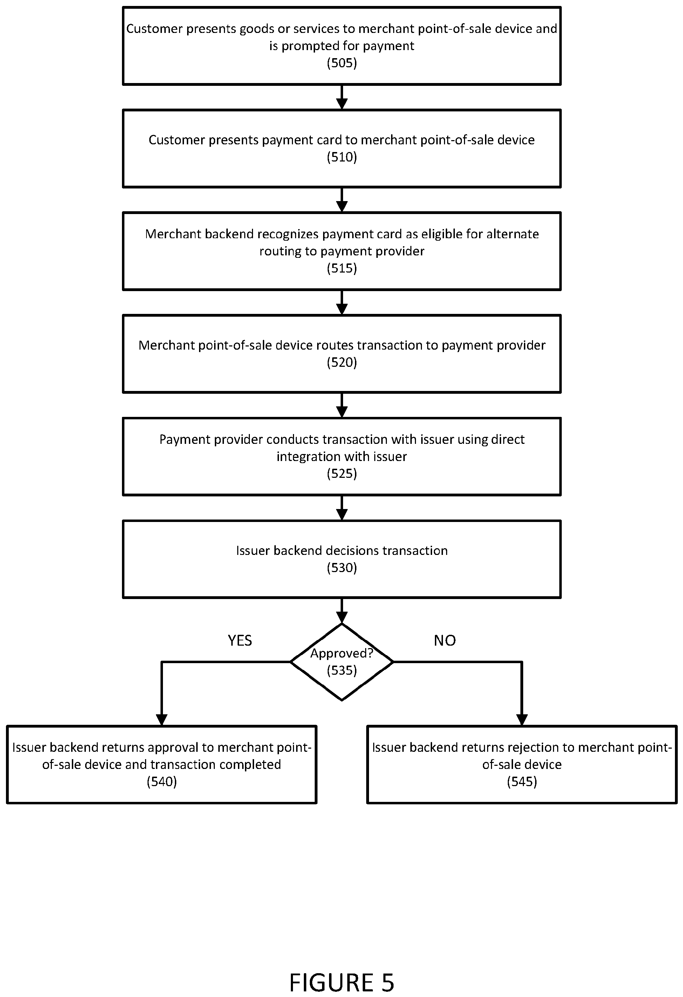

Referring to Figure 5, a method for conducting payment network-less transactions is provided according to another embodiment. The transaction may be conducted without using a traditional payment network.

In step 505, a customer may present goods or services to a merchant point-of-sale device and may be prompted for payment. This may be similar to step 220.

In step 510, the customer may present a physical payment card to the merchant point-of-sale device or may present the payment card via a wallet application.

In step 515, the merchant backend may recognize the payment card as being eligible for alternate routing to a payment provider. In one embodiment, the merchant backend may recognize that the payment card is eligible for alternate routing based on, for example, a BIN for the payment card, by receiving an identifier received from a mobile application (e.g., an issuer application, a wallet application, etc.), executed by a user electronic device.

In one embodiment, the transaction may be conducted using direct integration in response to a payment network or the issuer backend being unavailable.

In step 520, the merchant point-of-sale device may route the transaction to payment provider to the issuer, and in step 525, the payment provider may conduct the transaction with the issuer of the payment card via direct integration with the issuer. For example, the direct integration enables the payment provider to bypass the payment network or any intervening system between it and the issuer. The payment provider may call the issuer directly using, for example, issuer APIs.

In step 530, the issuer backend may decision the transaction.

If, in step 535, the transaction is approved, in step 540, the issuer backend may return an approval to the merchant point-of-sale device and the transaction may be completed. The issuer backend may include the transaction identifier in the communication.

If the transaction is rejected, in step 545, the issuer backend may return a rejection to the merchant point-of-sale device. The issuer backend may include the transaction identifier in the communication.

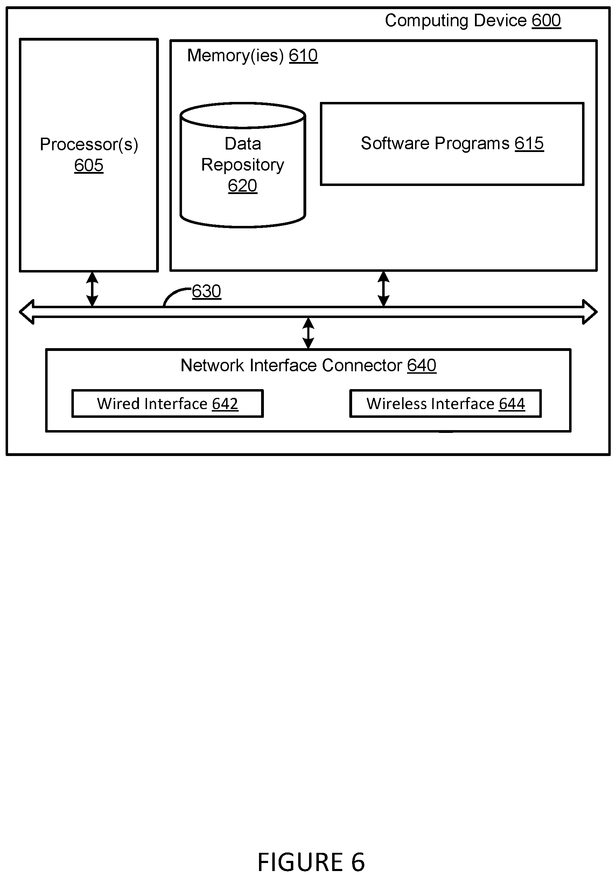

Figure 6 depicts an exemplary computing system for implementing aspects of the present disclosure. Figure 6 depicts exemplary computing device 600. Computing device 600 may represent the system components described herein. Computing device 600 may include processor 605 that may be coupled to memory 610. Memory 610 may include volatile memory. Processor 605 may execute computer-executable program code stored in memory 610, such as software programs 615. Software programs 615 may include one or more of the logical steps disclosed herein as a programmatic instruction, which may be executed by processor 605. Memory 610 may also include data repository 620, which may be nonvolatile memory for data persistence. Processor 605 and memory 610 may be coupled by bus 630. Bus 630 may also be coupled to one or more network interface connectors 640, such as wired network interface 642 or wireless network interface 644. Computing device 600 may also have user interface components, such as a screen for displaying graphical user interfaces and receiving input from the user, a mouse, a keyboard and/or other input/output components (not shown).

Although several embodiments have been disclosed, it should be recognized that these embodiments are not exclusive to each other and features from one embodiment may be used with others.

Hereinafter, general aspects of implementation of the systems and methods of embodiments will be described.

Embodiments of the system or portions of the system may be in the form of a "processing machine," such as a general-purpose computer, for example. As used herein, the term "processing machine" is to be understood to include at least one processor that uses at least one memory. The at least one memory stores a set of instructions. The instructions may be either permanently or temporarily stored in the memory or memories of the processing machine. The processor executes the instructions that are stored in the memory or memories in order to process data. The set of instructions may include various instructions that perform a particular task or tasks, such as those tasks described above. Such a set of instructions for performing a particular task may be characterized as a program, software program, or simply software.

In one embodiment, the processing machine may be a specialized processor.

In one embodiment, the processing machine may be a cloud-based processing machine, a physical processing machine, or combinations thereof.

As noted above, the processing machine executes the instructions that are stored in the memory or memories to process data. This processing of data may be in response to commands by a user or users of the processing machine, in response to previous processing, in response to a request by another processing machine and/or any other input, for example.

As noted above, the processing machine used to implement embodiments may be a general-purpose computer. However, the processing machine described above may also utilize any of a wide variety of other technologies including a special purpose computer, a computer system including, for example, a microcomputer, mini-computer or mainframe, a programmed microprocessor, a micro-controller, a peripheral integrated circuit element, a CSIC (Customer Specific Integrated Circuit) or ASIC (Application Specific Integrated Circuit) or other integrated circuit, a logic circuit, a digital signal processor, a programmable logic device such as a FPGA (Field-Programmable Gate Array), PLD (Programmable Logic Device), PLA (Programmable Logic Array), or PAL (Programmable Array Logic), or any other device or arrangement of devices that is capable of implementing the steps of the processes disclosed herein.

The processing machine used to implement embodiments may utilize a suitable operating system.

It is appreciated that in order to practice the method of the embodiments as described above, it is not necessary that the processors and/or the memories of the processing machine be physically located in the same geographical place. That is, each of the processors and the memories used by the processing machine may be located in geographically distinct locations and connected so as to communicate in any suitable manner. Additionally, it is appreciated that each of the processor and/or the memory may be composed of different physical pieces of equipment. Accordingly, it is not necessary that the processor be one single piece of equipment in one location and that the memory be another single piece of equipment in another location. That is, it is contemplated that the processor may be two pieces of equipment in two different physical locations. The two distinct pieces of equipment may be connected in any suitable manner. Additionally, the memory may include two or more portions of memory in two or more physical locations.

To explain further, processing, as described above, is performed by various components and various memories. However, it is appreciated that the processing performed by two distinct components as described above, in accordance with a further embodiment, may be performed by a single component. Further, the processing performed by one distinct component as described above may be performed by two distinct components.

In a similar manner, the memory storage performed by two distinct memory portions as described above, in accordance with a further embodiment, may be performed by a single memory portion. Further, the memory storage performed by one distinct memory portion as described above may be performed by two memory portions.

Further, various technologies may be used to provide communication between the various processors and/or memories, as well as to allow the processors and/or the memories to communicate with any other entity; i.e., so as to obtain further instructions or to access and use remote memory stores, for example. Such technologies used to provide such communication might include a network, the Internet, Intranet, Extranet, a LAN, an Ethernet, wireless communication via cell tower or satellite, or any client server system that provides communication, for example. Such communications technologies may use any suitable protocol such as TCP/IP, UDP, or OSI, for example.

As described above, a set of instructions may be used in the processing of embodiments. The set of instructions may be in the form of a program or software. The software may be in the form of system software or application software, for example. The software might also be in the form of a collection of separate programs, a program module within a larger program, or a portion of a program module, for example. The software used might also include modular programming in the form of object-oriented programming. The software tells the processing machine what to do with the data being processed.

Further, it is appreciated that the instructions or set of instructions used in the implementation and operation of embodiments may be in a suitable form such that the processing machine may read the instructions. For example, the instructions that form a program may be in the form of a suitable programming language, which is converted to machine language or object code to allow the processor or processors to read the instructions. That is, written lines of programming code or source code, in a particular programming language, are converted to machine language using a compiler, assembler or interpreter. The machine language is binary coded machine instructions that are specific to a particular type of processing machine, i.e., to a particular type of computer, for example. The computer understands the machine language.

Any suitable programming language may be used in accordance with the various embodiments. Also, the instructions and/or data used in the practice of embodiments may utilize any compression or encryption technique or algorithm, as may be desired. An encryption module might be used to encrypt data. Further, files or other data may be decrypted using a suitable decryption module, for example.

As described above, the embodiments may illustratively be embodied in the form of a processing machine, including a computer or computer system, for example, that includes at least one memory. It is to be appreciated that the set of instructions, i.e., the software for example, that enables the computer operating system to perform the operations described above may be contained on any of a wide variety of media or medium, as desired. Further, the data that is processed by the set of instructions might also be contained on any of a wide variety of media or medium. That is, the particular medium, i.e., the memory in the processing machine, utilized to hold the set of instructions and/or the data used in embodiments may take on any of a variety of physical forms or transmissions, for example. Illustratively, the medium may be in the form of a compact disc, a DVD, an integrated circuit, a hard disk, a floppy disk, an optical disc, a magnetic tape, a RAM, a ROM, a PROM, an EPROM, a wire, a cable, a fiber, a communications channel, a satellite transmission, a memory card, a SIM card, or other remote transmission, as well as any other medium or source of data that may be read by the processors.

Further, the memory or memories used in the processing machine that implements embodiments may be in any of a wide variety of forms to allow the memory to hold instructions, data, or other information, as is desired. Thus, the memory might be in the form of a database to hold data. The database might use any desired arrangement of files such as a flat file arrangement or a relational database arrangement, for example.

In the systems and methods, a variety of "user interfaces" may be utilized to allow a user to interface with the processing machine or machines that are used to implement embodiments. As used herein, a user interface includes any hardware, software, or combination of hardware and software used by the processing machine that allows a user to interact with the processing machine. A user interface may be in the form of a dialogue screen for example. A user interface may also include any of a mouse, touch screen, keyboard, keypad, voice reader, voice recognizer, dialogue screen, menu box, list, checkbox, toggle switch, a pushbutton or any other device that allows a user to receive information regarding the operation of the processing machine as it processes a set of instructions and/or provides the processing machine with information. Accordingly, the user interface is any device that provides communication between a user and a processing machine. The information provided by the user to the processing machine through the user interface may be in the form of a command, a selection of data, or some other input, for example.

As discussed above, a user interface is utilized by the processing machine that performs a set of instructions such that the processing machine processes data for a user. The user interface is typically used by the processing machine for interacting with a user either to convey information or receive information from the user. However, it should be appreciated that in accordance with some embodiments of the system and method, it is not necessary that a human user actually interact with a user interface used by the processing machine. Rather, it is also contemplated that the user interface might interact, i.e., convey and receive information, with another processing machine, rather than a human user. Accordingly, the other processing machine might be characterized as a user. Further, it is contemplated that a user interface utilized in the system and method may interact partially with another processing machine or processing machines, while also interacting partially with a human user.

It will be readily understood by those persons skilled in the art that embodiments are susceptible to broad utility and application. Many embodiments and adaptations of the present invention other than those herein described, as well as many variations, modifications and equivalent arrangements, will be apparent from or reasonably suggested by the foregoing description thereof, without departing from the substance or scope.

Accordingly, while the embodiments of the present invention have been described here in detail in relation to its exemplary embodiments, it is to be understood that this disclosure is only illustrative and exemplary of the present invention and is made to provide an enabling disclosure of the invention. Accordingly, the foregoing disclosure is not intended to be construed or to limit the present invention or otherwise to exclude any other such embodiments, adaptations, variations, modifications or equivalent arrangements.

## Claims

1. A method, comprising:
receiving, by a computer application executed on an electronic device, payment card information for a payment card;
receiving by the computer application, a rule for the payment card from an issuer backend, the issuer backend associated with an issuer of the payment card;
communicating, by the computer application and to a merchant point-of-sale device, an indication that a transaction for a good or service will be conducted without using a payment network;
receiving, by the computer application and from the merchant point-of-sale device, transaction details for the transaction;
decisioning, by the computer application, the transaction by applying the rule to the transaction details;
communicating, by the computer application, approval to the merchant point-of-sale device in response to approving the transaction; and
sending, by the computer application, payment advice to the issuer backend.

2. The method of claim 1, wherein the payment card comprises a payment token.

3. The method of claim 1, wherein the rule comprises a purchase limit.

4. The method of claim 1, wherein the rule comprises a restriction on a type of good or service, or on a merchant category.

5. The method of claim 1, wherein the transaction details comprise a transaction amount, a merchant identifier, and a description of the good or service.

6. The method of claim 1, wherein the approval comprises a transaction identifier or an approval identifier.

7. The method of claim 6, wherein the payment advice comprises the transaction identifier or the approval identifier and the transaction details.

8. The method of claim 1, wherein the transaction is conducted without using a payment network in response to a payment network or the issuer backend being unavailable.

9. A method, comprising:
prompting, by a merchant point-of-sale device, a customer for payment for a transaction;
reading, by the merchant point-of-sale device and using a camera, an optical code that identifies a payment card and comprises an indicator for payment network-less transactions;
identifying, by the merchant point-of-sale device, the transaction as a payment network-less transaction based on the optical code;
communicating, by the merchant point-of-sale device and without using a payment network, transaction details for the transaction, information from the optical code, and a merchant identifier to an issuer backend for an issuer of the payment card; and
receiving, by the merchant point-of-sale device and from the issuer backend, a decision on the transaction.

10. The method of claim 9, wherein the optical code is read from a payment card or from a customer electronic device.

11. The method of claim 9, wherein the optical code comprises a Quick Response (QR) code or a bar code.

12. The method of claim 9, further comprising:
receiving, by the merchant point-of-sale device, a personal identification number (PIN);
wherein the merchant point-of-sale device communicates the PIN with the information from the optical code.

13. The method of claim 9, wherein the decision comprises a rejection of the transaction, and further comprising:
executing, by the merchant point-of-sale device, the transaction using a payment network.

14. The method of claim 10, wherein the issuer backend is configured to push a notification to the customer electronic device and to receive confirmation for the transaction from a computer application associated with the issuer backend.

15. The method of claim 14, wherein the customer electronic device is configured to suppress the notification from other computer applications on the customer electronic device.

16. The method of claim 9, further comprising:
approving, by an issues application executed by a customer electronic device, the transaction in response to the issuer backend being unavailable.

17. A method, comprising:
prompting, by a merchant point-of-sale device, a customer for payment for a transaction;
receiving, by the merchant point-of-sale device, a payment card and from the customer;
identifying, by the merchant point-of-sale device, the payment card as eligible for alternate routing to a payment provider;
routing, by the merchant point-of-sale device, transaction details for the transaction and payment card information read from the payment card to the payment provider;
conducting, by the payment provider, the transaction using direct integration with an issuer of the payment card, wherein the direct integration bypasses a payment network; and
receiving, by the merchant point-of-sale device, a decision on the transaction from an issuer backend for the issuer.

18. The method of claim 17, wherein the payment card is identified as eligible for alternate routing based on a bank identification number for the payment card.

19. The method of claim 17, wherein the payment card is identified as eligible for alternate routing based on an identifier received from an application executed by an electronic device associated with the customer.

20. The method of claim 17, wherein the transaction is conducted using direct integration in response to a payment network or the issuer backend being unavailable.
